# EUROPÄISCHE PATENTSCHRIFT

(11) **EP 0 449 023 B1**
(45) Veröffentlichungstag und Bekanntmachung des Hinweises auf die Patenterteilung: **16.10.1996**
(21) Anmeldenummer: 91103688.7
(22) Anmeldetag: 11.03.1991
(51) Int. Cl.: G01F 23/28

(54) **Vorrichtung zur Feststellung und/oder Überwachung eines vorbestimmten Füllstands in einem Behälter**
Device for determining and/or monitoring a predetermined filling level in a container
Dispositif pour détecter et/ou surveiller un niveau prédéterminé dans un récipient

(30) Priorität: 14.03.1990 DE 4008135
(43) Veröffentlichungstag der Anmeldung: 02.10.1991
(73) Patentinhaber: Endress u. Hauser GmbH u. Co., D-79689 Maulburg (DE)
(72) Erfinder: Pfeiffer, Helmut, W-7853 Steinen (DE)
(74) Vertreter: Leiser, Gottfried, Dipl.-Ing.

(56) Entgegenhaltungen:
- DE-A- 2 632 297
- DE-A- 2 743 394
- GB-A- 1 531 729
- GB-A- 2 146 770

## Beschreibung

Die Erfindung betrifft eine Vorrichtung zur Feststellung und/oder Überwachung eines vorbestimmten Füllstands in einem Behälter, mit einem Behälter, an dem ein auf der Höhe des vorbestimmten Füllstands liegender Membranbereich der Behälterwand zur Bidung eines Membranbereichs allseitig durch einen an der Außenseite der Behälterwand angebrachten, in starrer Verbindung mit der Behälterwand stehenden Ring oder Rahmen abgegrenzt ist, dessen Masse größer als die Masse des abgegrenzten Membranbereichs der Behälterwand ist, mit einem elektromechanischen Erregungswandler, der bei Speisung mit einer elektrischen Spannung den abgegrenzten Membranbereich der Behälterwand in Schwingungen versetzt, einem elektromechanischen Empfangswandler, der die Schwingungen des abgegrenzten Bereichs der Behälterwand in eine elektrische Wechselspannung umsetzt, und mit einer Auswerteschaltung zur Auslösung von Anzeige- und/oder Schaltvorgängen in Abhängigkeit von der Frequenz, der Phase oder der Amplitude der vom Empfangswandler abgegebenen Wechselspannung.

Eine ähnliche Vorrichtung ist aus der US-A-2 990 543 bekannt. Sie weist gegenüber anderen bekannten Vorrichtungen, die beispielsweise aus der GB-A 1 531 729 und der DE-A 2 632 297 bekannt sind, den Vorteil auf, daß die Stelle der Behälterwand, an der der Füllstand festgestellt werden soll, nicht durchbrochen sein muß.

Aus der DE-A-2 743 394 ist es ebenfalls bereits bekannt, einen Füllstandsensor auf der Höhe des vorbestimmten Füllstands an der Außenseite des Behälters zu befestigen, ohne daß eine Öffnung in der Behälterwand benötigt wird. In diesem Fall handelt es sich aber um einen Schall- oder Ultra-schall-Echolotsensor, der Schall- oder Ultraschallimpulse durch die Behälterwand schickt und die von der gegenüberliegenden Behälterwand reflektierten Echoimpulse empfängt. Die Befestigung des Echolotsensors geschieht mit Hilfe eines um den Behälter gelegten Spannbandes. Der Bereich der Behälterwand, an dem der Echolotsensor anliegt, dient nur als Übertragungsmedium für die vom Echolotsensor erzeugten Schall- oder Ultraschallimpulse, und die Feststellung des Füllstands erfolgt in Abhängigkeit davon, ob reflektierte Schall- oder Ultraschallimpulse empfangen werden oder nicht.

Bei Vorrichtungen der eingangs angegebenen Art besteht das Problem, den Bereich der Behälterwand, der als schwingende Membran dienen soll, in definierter Weise abzugrenzen. Dies ist insbesondere bei gekrümmten Behälterwänden schwierig.

Aufgabe der Erfindung ist daher die Schaffung einer Vorrichtung der eingangs angegebenen Art, die sowohl bei ebenen als auch bei gekrümmten Behältern eine definierte Abgrenzung der Membranfläche auf der Behälterwand ergibt.

Gemäß einer ersten Ausführungsform der Erfindung wird diese Aufgabe dadurch gelöst, daß die der Behälterwand zugewandte Stirnfläche des Rings oder Rahmens abgeschrägt ist, so daß der Ring oder Rahmen nur mit der Innenkante an der Behälterwand anliegt.

Bei dieser Ausführungsform wird die gesamte Masse des Rings oder Rahmens auf eine praktisch linienförmige Umrandung des abgegrenzten Bereichs der Behälterwand konzentriert. Dadurch wird eine scharfe und genau definierte Abgrenzung des Membranbereichs erzielt.

Gemäß einer zweiten Ausführungsform der Erfindung wird die obige Aufgabe dadurch gelöst, daß der Ring oder Rahmen in Segmente unterteilt ist, die an den der Behälterwand zugewandten Flächen mit entlang ihren Kanten verlaufenden Fußleisten versehen sind, die an der Behälterwand anliegen, während der zwischen den Fußleisten liegende Teil jedes Segments im Abstand von der Behälterwand liegt.

Diese Ausführungsform ergibt den Vorteil, daß sich die Segmente an die Krümmung der Behälterwand anpassen. Die Masse des Rings oder Rahmens ist wieder auf die schmalen Berührungsflächen zwischen den Fußleisten und der Behälterwand konzentriert, wodurch eine definierte Abgrenzung des Membranbereichs erzielt wird.

Vorteilhafte Ausgestaltungen und Weiterbildungen der erfindungsgemäßen Vorrichtung sind in den Unteransprüchen gekennzeichnet.

Die Erfindung wird nachfolgend anhand von Ausführungsbeispielen beschrieben, die in den Zeichnungen dargestellt sind. In den Zeichnungen zeigen:
- Fig. 1: einen Behälter mit zwei Vorrichtungen zur Feststellung und/oder Überwachung eines maximalen und eines minimalen Füllstands,
- Fig. 2: eine Draufsicht auf den Sensor einer der beiden Vorrichtungen von Fig. 1,
- Fig. 3: einen Schnitt durch den Sensor von Fig. 2 nach der Linie III-III in Fig. 2,
- Fig. 4: ein Diagramm des Zusammenhangs zwischen dem Füllstand und der Eigenresonanzfrequenz des Membranbereichs des Sensors von Fig. 2 und 3,
- Fig. 5: die Amplituden-Frequenz-Kennlinien des Sensors von Fig. 2 und 3 bei zwei verschiedenen Füllständen im Behälter,
- Fig. 6: eine andere Ausführungsform des Sensors,
- Fig. 7: die Befestigung eines Teils des Sensors von Fig. 6 an der Behälterwand,
- Fig. 8: eine zum Teil geschnittene Ansicht der oberen Rahmenteile des Sensors von Fig. 6,
- Fig. 9: eine teilweise aufgeschnittene perspektivische Darstellung der einen seitlichen Rahmenleiste des Sensors von Fig. 6,
- Fig. 10: eine teilweise aufgeschnittene Vorderansicht eines Teils der Rahmenleiste von Fig. 9,
- Fig. 11: eine teilweise aufgeschnittene perspektivische Darstellung der anderen seitlichen Rahmenleiste des Sensors von Fig. 6 und
- Fig. 12 bis 14: graphische Darstellungen zur Erläuterung der mit dem Sensor erzielten Wirkung.

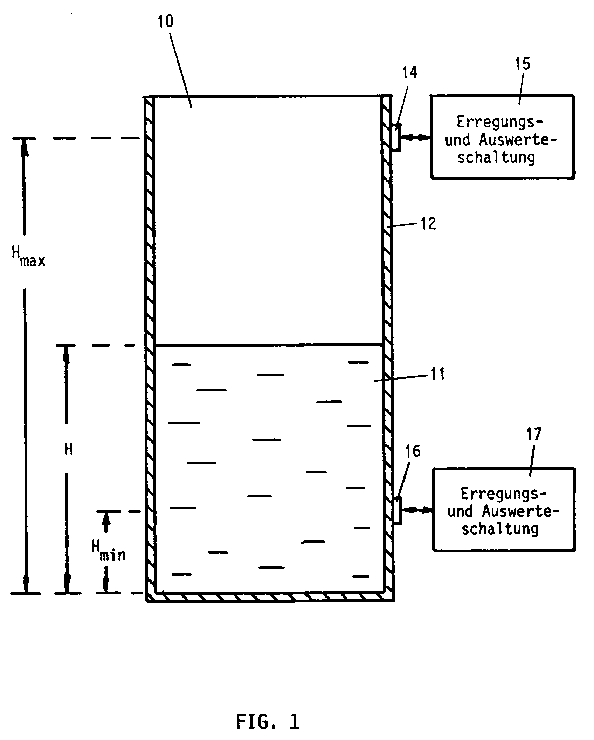

Fig. 1 zeigt einen Behälter 10, der bis zu einer Höhe H mit einem flüssigen Füllgut 11 gefüllt ist. Die Höhe H des Füllguts im Behälter 10 ist der Füllstand. Der Füllstand soll einen Minimalwert Hₘᵢₙ nicht unterschreiten und einen Maximalwert Hₘₐₓ nicht überschreiten. Zur Überwachung des maximalen Füllstands ist an der Wand 12 des Behälters 10 auf der Höhe Hₘₐₓ ein Füllstandssensor 14 angebracht, der mit einer zugehörigen Erregungs- und Auswerteschaltung 15 verbunden ist, und zur Überwachung des minimalen Füllstands ist an der Behälterwand 12 auf der Höhe Hₘᵢₙ ein Füllstandssensor 16 angebracht, der mit einer zugehörigen Erregungs- und Auswerteschaltung 17 verbunden ist. Jeder Füllstandssensor 14, 16 ist so ausgebildet, daß er zur zugehörigen Erregungs- und Auswerteschaltung 15 bzw. 17 ein elektrisches Signal liefert, das anzeigt, ob sich im Behälter auf der Höhe des Sensors Füllgut befindet oder nicht.

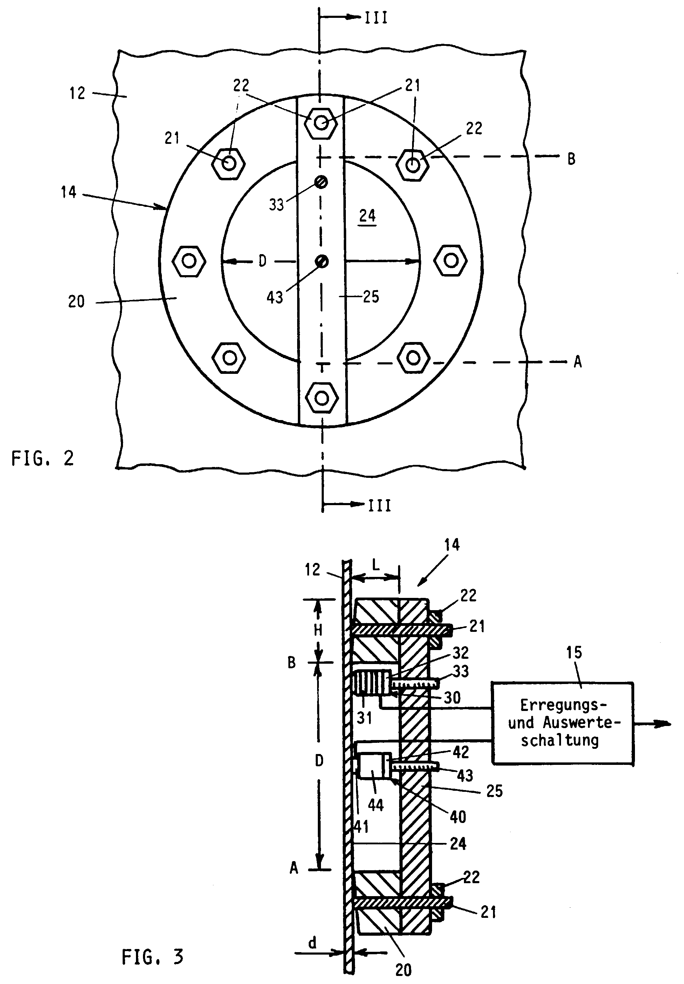

Der Sensor 14 ist in den Figuren 2 und 3 in näheren Einzelheiten dargestellt. Die beiden Sensoren 14 und 16 sind völlig gleich ausgebildet; die folgende Beschreibung des Sensors 14 gilt daher in gleicher Weise auch für den Sensor 16. Die Besonderheit dieser Sensoren besteht darin, daß sie vollständig an der Außenseite des Behälters 10 angeordnet sind und für ihre Funktion keine Öffnung in der Behälterwand erfordern.

Die Figuren 2 und 3 zeigen einen Abschnitt der Behälterwand 12 mit dem darauf montierten Sensor 14, wobei angenommen ist, daß die Behälterwand 12 eben ist. Auf der Außenseite der Behälterwand 12 ist ein Metallring 20 in kraftschlüssiger Verbindung befestigt, so daß er in schwingungsmechanischer Verbindung mit der Behälterwand 12 steht. Bei dem dargestellten Beispiel ist die kraftschlüssige Verbindung dadurch hergestellt, daß an der Behälterwand 12 mehrere Gewindebolzen 21 angebracht sind, die durch Bohrungen im Metallring 20 ragen. Die Gewindebolzen 21 können an der Behälterwand 12 durch Punktschweißung oder auf andere Weise befestigt sein. Durch Muttern 22, die auf die Gewindebolzen 21 aufgeschraubt sind, ist der Metallring 20 fest gegen die Behälterwand 12 gepreßt. Durch den Metallring 20 ist ein kreisförmiger Bereich 24 der Behälterwand 12 abgegrenzt, der als Membran des Sensors dient.

Um eine definierte Abgrenzung der Membranfläche auf der Behälterwand zu erreichen, ist die der Behälterwand 12 zugewandte Stirnseite des Metallrings 20 leicht nach außen angeschrägt, so daß der Metallring 20 nur mit der Innenkante an der Behälterwand 12 anliegt. Dies ist in Fig. 3 zur Verdeutlichung übertrieben dargestellt; der Winkel zwischen der Behälterwand 12 und der Stirnseite des Metallrings 20 ist in Wirklichkeit sehr viel kleiner, beispielsweise in der Größenordnung von 0,1°.

Damit die auf diese Weise definierte Membran mit einer ausreichend niedrigen Arbeitsfrequenz betrieben werden kann, muß der Durchmesser des abgegrenzten Bereichs 24, also der Innendurchmesser des Metallrings 20, groß gegen die Dicke d der Behälterwand sein. Beispielsweise kann die Arbeitsfrequenz etwa 5 kHz betragen, wenn bei einer Behälterwanddicke d von 2,5 mm der Membranbereich 24 einen Durchmesser D von etwa 60 mm hat.

Auf dem Metallring 20 ist eine sich in vertikaler Richtung diametral erstreckende Brücke 25 befestigt. Die Brücke 25 besteht aus einem steifen Metallteil, das an jedem Ende eine Bohrung aufweist. Mit diesen Bohrungen ist die Brücke 25 auf zwei einander diametral gegenüberliegende Gewindebolzen 21 aufgesteckt, so daß sie durch die auf diese Gewindebolzen 21 aufgeschraubten Muttern 22 auf dem Metallring 20 festgehalten wird.

Zwischen der Brücke 25 und dem Membranbereich 24 ist nahe dem Metallring 20 ein Erregungswandler 30 angeordnet, der in der Lage ist, bei Erregung durch eine elektrische Wechselspannung den Membranbereich 24 in Schwingungen zu versetzen. Als Beispiel ist angenommen, daß der Erregungswandler 30 durch einen Stapel von Piezoelementen 31 gebildet ist, der zwischen dem Membranbereich 24 und einem Andruckplättchen 32 eingespannt ist. Eine Madenschraube 33, die in eine Gewindebohrung in der Brücke 25 eingeschraubt ist, wirkt auf das Andruckplättchen 32 ein, um eine gewisse Vorspannung des Piezostapels auf dem Membranbereich zu erzielen. Mit Hilfe der Madenschraube 33 kann die Kraft eingestellt werden, mit der der Piezostapel an den Membranbereich 24 angedrückt wird.

Jedes Piezoelement 31 des Stapels besteht in bekannter Weise aus einem zwischen zwei Elektroden angeordneten scheibenförmigen Piezokristall. Beim Anlegen einer elektrischen Spannung an die beiden Elektroden ändert sich die Dicke des Piezokristalls in Abhängigkeit von der Spannung. Die Piezoelemente 31 sind elektrisch parallelgeschaltet, so daß sich ihre Dicken beim Anlegen einer elektrischen Spannung gleichsinnig ändern, und sie sind mechanisch in Serie geschaltet, so daß sich ihre Dickenänderungen addieren. Somit ändert sich die axiale Länge des Piezostapels in Abhängigkeit von der an die Piezoelemente 31 angelegten elektrischen Spannung. Da der Piezostapel am einen Ende durch die Brücke 25 über die Madenschraube 33 festgehalten ist, wirken sich die Längenänderungen des Piezostapels auf den Membranbereich 24 aus, der entsprechend mechanisch verformt wird. Die Schwingungsamplitude des Membranbereichs liegt je nach der Dicke d der Behälterwand in der Größenordnung von wenigen µm.

In der Mitte des Membranbereichs 24 ist zwischen der Brücke 25 und dem Membranbereich 24 ein Empfangswandler 40 angeordnet, der auf mechanische Schwingungen des Membranbereichs anspricht und diese in eine elektrische Spannung umwandelt. Als Beispiel ist angenommen, daß der Empfangswandler 40 in gleicher Weise wie der Erregungswandler 30 als piezoelektrischer Wandler ausgebildet ist. Anders als beim Erregungswandler 30 genügt jedoch für den Empfangswandler 40 ein einziges Piezoelement 41. Zwischen dem Piezoelement 41 und einem Andruckplättchen 42, auf das eine Madenschraube 43 einwirkt, ist eine zylindrische Silikonmasse 44 eingefügt. Die Madenschraube 43 ist in eine Gewindebohrung in der Brücke 25 eingeschraubt und übt über das Andruckplättchen 42 und die Silikonmasse 44 auf das Piezoelement 41 eine Kraft aus, durch die es in Anlage an dem Membranbereich 24 gehalten wird. Dabei wirkt die Silikonmasse 44 als elastisches Federelement. Die Verwendung einer Silikonmasse anstelle einer metallischen Druckfeder, beispielsweise einer Schraubenfeder, erweist sich als vorteilhaft, weil die Silikonmasse eine nichtlineare, progressiv ansteigende Federkennlinie und eine gewisse innere Dämpfung besitzt.

Der Erregungswandler 30 ist an einen Ausgang der Erregungs- und Auswerteschaltung 15 angeschlossen, und der Empfangswandler 40 ist mit einem Eingang der Erregungs- und Auswerteschaltung 15 verbunden. Die Erregungs- und Auswerteschaltung legt an den Erregungswandler 30 eine Spannung an, die zur Folge hat, daß der Erregungswandler 30 auf den von ihm berührten Teil des Membranbereichs 24 wechselnde Kräfte ausübt, die senkrecht zu der Ebene des Membranbereichs gerichtet sind. Dadurch wird der Membranbereich in Biegeschwingungen versetzt. Infolge der Biegeschwingungen werden auf den in der Mitte angeordneten Empfangswandler 40 Kräfte ausgeübt, die von diesem in eine elektrische Wechselspannung umgewandelt werden, die der Erregungs- und Auswerteschaltung 15 zugeführt wird.

Die Anordnung des Empfangswandlers 40 in der Mitte des Membranbereichs 24 ist am günstigsten, weil dort die Biegeschwingungsamplitude für den Grundschwingungsmodus am größten ist, während die Biegeschwingungsamplitude für alle geradzahligen höheren Schwingungsmoden im wesentlichen Null ist. Die Anordnung des Empfangswandlers 40 an dieser Stelle ergibt daher die größte Empfindlichkeit für den Grundschwingungsmodus, während andere Moden weitgehend unterdrückt werden. Dagegen ist die Anordnung des Erregungswandlers 30 im Randbereich am günstigsten, weil dort nur kleine Schwingungsamplituden auftreten. Dies ermöglicht die für die Schwingungsanregung erforderliche starre Vorspannung des Erregungswandlers 30.

Wenn das Füllgut im Behälter eine Flüssigkeit ist, hängt die Eigenresonanzfrequenz des Membranbereichs davon ab, ob der Membranbereich 24 auf der Innenseite der Behälterwand 12 von der Flüssigkeit bedeckt ist oder nicht. Während bei unbedecktem Membranbereich die schwingende Masse allein durch die Masse des Membranbereichs bestimmt ist, schwingt bei bedecktem Membranbereich ein Teil der an den Membranbereich angrenzende Flüssigkeitsmasse mit. Die Masse des schwingenden Systems ist daher bei bedecktem Membranbereich größer, und dementsprechend ist die Eigenresonanzfrequenz niedriger. Eine zusätzliche Dämpfung infolge der Viskosität des Füllguts vergrößert die Frequenzänderung.

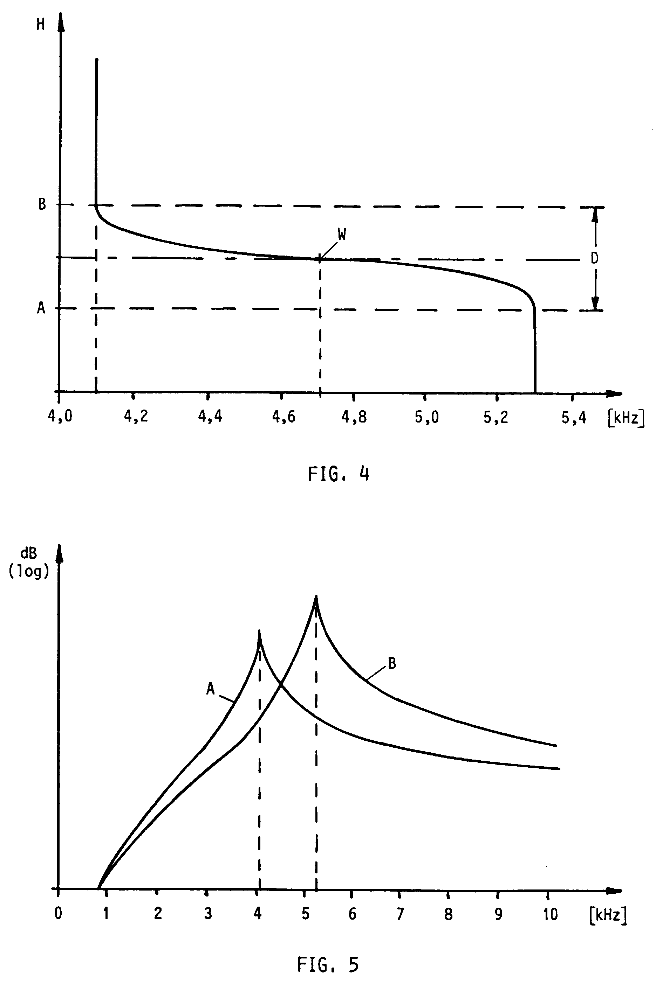

Das Diagramm von Fig. 4 zeigt den Zusammenhang zwischen dem Füllstand im Behälter und der Eigenresonanzfrequenz des Membranbereichs 24. Dabei ist der Füllstand auf der Ordinate aufgetragen, da dies den räumlichen Verhältnissen entspricht, denn der Füllstand wird in vertikaler Richtung gemessen. Der Punkt A entspricht dem tiefsten Punkt des Membranbereichs 24 und der Punkt B dem höchsten Punkt des Membranbereichs. Der Abstand zwischen den Punkten A und B entspricht dem Durchmesser D des Membranbereichs. Die beiden Punkte A und B sind auch in den Figuren 2 und 3 in der gleichen Weise bezeichnet.

Die im Diagramm von Fig. 4 angegebenen Frequenzen entsprechen einem praktischen Ausführungsbeispiel mit den zuvor angegebenen Abmessungen, also einer Behälterwanddicke d von 2,5 mm und einem Durchmesser D des Membranbereichs von 60 mm. Wenn der Füllstand im Behälter 10 über dem höchsten Punkt B des Membranbereichs 24 liegt, hat der Membranbereich 24 eine Eigenresonanzfrequenz von etwa 4,1 kHz, die sich in Abhängigkeit vom Füllstand nicht weiter ändert. Wenn der Füllstand im Behälter 10 unter dem tiefsten Punkt A des Membranbereichs 24 liegt, hat der Membranbereich 24 eine Eigenresonanzfrequenz von etwa 5,3 kHz, die sich ebenfalls in Abhängigkeit vom Füllstand nicht weiter ändert. Zwischen diesen beiden Frequenzwerten liegt ein beträchtlicher Frequenzabstand von etwa 1,2 kHz, der sehr deutlich erkennen laßt, ob sich der Füllstand im Behälter 10 oberhalb oder unterhalb des Membranbereichs des Sensors befindet.

Wenn sich der Füllstand zwischen den beiden Punkten A und B befindet, der Membranbereich 24 also teilweise vom Füllgut bedeckt ist, hängt die Eigenresonanzfrequenz sehr stark vom Bedeckungsgrad ab. Verringert man beispielsweise den Füllstand von einer oberhalb des höchsten Punktes B liegenden Stelle, so ändert sich nach dem Unterschreiten des Punktes B die Eigenresonanzfrequenz zunächst wenig, solange der Füllstand noch in der oberen Randzone des Membranbereichs liegt. In der mittleren Zone des Membranbereichs 24 erfolgt dagegen eine schnelle Änderung der Eigenresonanzfrequenz, wobei die Frequenzkurve etwa in der Mitte des Membranbereichs einen Wendepunkt W hat. In der unteren Randzone des Membranbereichs erreicht die Eigenresonanzfrequenz nahezu den der unbedeckten Membran entsprechenden Wert, so daß sie sich nur noch sehr wenig ändert. Den gleichen Frequenzverlauf erhält man natürlich in umgekehrter Richtung, wenn der Füllstand von einer unterhalb des Membranbereichs 24 liegenden Stelle allmählich erhöht wird.

Das Diagramm von Fig. 5 zeigt die vom Empfangswandler 40 festgestellte Schwingungsamplitude, wenn die Frequenz der an den Erregungswandler 30 angelegten Wechselspannung im Bereich von 0 bis 10 kHz geändert wird. Dabei entspricht die Kurve A dem Fall, daß der Füllstand im Behälter 10 oberhalb des Sensors 14 steht, so daß der Membranbereich 24 vollständig vom Füllgut bedeckt ist, während die Kurve B dem Fall entspricht, daß der Füllstand im Behälter 10 unterhalb des Sensors 14 steht, der Sensor 14 also nicht vom Füllgut berührt wird. Die Kurve A hat ein ausgeprägtes Maximum bei der Frequenz von etwa 4,1 kHz, die der Eigenresonanzfrequenz bei bedecktem Membranbereich 24 entspricht, und die Kurve B hat ein ausgeprägtes Maximum bei der Frequenz von etwa 5,3 kHz, die der Eigenresonanzfrequenz bei unbedecktem Membranbereich 24 entspricht. Bei teilweise bedecktem Membranbereich 24 liegt das Maximum der Kurve zwischen diesen beiden Frequenzwerten an einer Stelle, die für jeden Füllstand dem Diagramm von Fig. 4 zu entnehmen ist.

Aus den Diagrammen von Fig. 4 und 5 ergeben sich für den Durchschnittsfachmann aufgrund seiner Fachkenntnisse verschiedene Möglichkeiten für die Ausbildung der Erregungs- und Auswerteschaltung 15. Beispielsweise kann die in der Erregungs- und Auswerteschaltung enthaltene Wechselspannungsquelle so ausgebildet sein, daß die Frequenz der an dem Erregungswandler 30 angelegten Wechselspannung periodisch in einem Bereich verändert wird, der alle vorkommenden Resonanzfrequenzen enthält. Die Erregungs- und Auswerteschaltung 15 enthält dann ferner einen Spitzenwertdetektor, der das Maximum des Ausgangssignals des Empfangswandlers 40 erkennt, sowie einen Frequenzdiskriminator, der feststellt, bei welcher Frequenz der Erregungswechselspannung dieses Maximum auftritt. Aus dem Diagramm von Fig. 4, das zuvor für den betreffenden Füllstandsensor aufgenommen und beispielsweise in Form einer Tabelle abgespeichert ist, kann dann der festgestellten Frequenz der entsprechende Füllstand zugeordnet werden.

Eine andere Ausbildung der Erregungs- und Auswerteschaltung 15 besteht darin, daß die Frequenz der Erregungswechselspannung stets gleich der Resonanzfrequenz des Membranbereichs 24 gehalten wird. Dies kann in einer allgemein bekannten Weise dadurch erfolgen, daß der Empfangswandler 40 mit dem Erregungswandler 30 über einen Verstärker in einem rückgekoppelten Selbsterregungskreis verbunden ist. In diesem Fall braucht nur noch durch einen in der Erregungs- und Auswerteschaltung 15 enthaltenen Frequenzdiskriminator die sich von selbst einstellende Selbsterregungsfrequenz festgestellt zu werden.

Weiterhin kann die Erregungs- und Auswerteschaltung 15 auch so ausgebildet sein, daß die Erregung des Erregungswandlers 30 durch Gleichstromimpulse erfolgt. Bekanntlich enthält ein Gleichstromimpuls ein Frequenzspektrum, dessen Ausdehnung von der Impulsbreite abhängt. Wenn die Impulsbreite so bemessen ist, daß die vorkommenden Resonanzfrequenzen des Membranbereichs 24 im Frequenzspektrum enthalten sind, wird der Membranbereich 24 zu Biegeschwingungen bei seiner Resonanzfrequenz angeregt. Das Ausgangssignal des Empfangswandlers 40 ist dann nach jedem Erregungsimpuls ein abklingender Schwingungszug, dessen Frequenz der Resonanzfrequenz entspricht und wieder durch einen Frequenzdiskriminator festgestellt werden kann.

Der beschriebene Sensor ermöglicht auch eine andere Auswertung der füllstandsabhängigen Änderung der Eigenresonanzfrequenz, die ohne Kalibrierung mit guter Genauigkeit anzeigt, ob der Füllstand beim Füllen oder Entleeren des Behälters die Mitte der Membran über- oder unterschreitet. Hierfür wird die zuvor erwähnte Tatsache ausgenutzt, daß die Frequenzkurve von Fig. 4 an einer bestimmten Stelle des Membranbereichs den Wendepunkt W aufweist. Durch Ermittlung des Wendepunkts kann daher ohne Kalibrierung festgestellt werden, wann der Füllstand diese Stelle des Membranbereichs erreicht hat.

Anstelle der Frequenz kann auch die Phasendifferenz zwischen dem Ausgangssignal des Empfangswandlers 40 und der dem Erregungswandler 30 zugeführten Erregungswechselspannung ermittelt und zur Feststellung des Füllstands ausgewertet werden, weil sich diese Phasendifferenz in Abhängigkeit vom Füllstand in gleicher Weise wie die Frequenz eindeutig ändert. Die Erregungs- und Auswerteschaltung 15 enthält dann anstelle eines Frequenzdiskriminators einen Phasendiskriminator.

Unabhängig von der Art der Erregung der Biegeschwingungen durch den Erregungswandler 30 und von der Auswertung des Ausgangssignals des Empfangswandlers 40 besteht ein wesentlicher Vorteil des beschriebenen Füllstandssensors darin, daß nicht nur festgestellt werden kann, ob sich der Füllstand oberhalb oder unterhalb des Membranbereichs 24 befindet, sondern daß sogar mit guter Genauigkeit bestimmt werden kann, an welcher Stelle innerhalb des Membranbereichs sich der Füllstand befindet. Der Detektionsbereich ist dadurch wesentlich enger als der dem Membrandurchmesser entsprechende Bereich, und demzufolge kann mit entsprechend größerer Genauigkeit festgestellt werden, ob der vorgegebene Füllstand erreicht ist oder nicht.

Es ist nicht erforderlich, daß der abgegrenzte Membranbereich kreisrund ist; er kann auch andere Formen haben, beispielsweise quadratisch oder rechteckig sein. Anstelle des kreisrunden Metallrings 20 von Fig. 2 und 3 wird dann auf der Behälterwand ein Metallrahmen mit dem gewünschten Umriß befestigt. Ferner eignet sich der beschriebene Sensor nicht nur für ebene Behälterwände, sondern auch für gekrümmte Behälterwände, wobei natürlich der Metallring oder Metallrahmen so geformt sein muß, daß er an allen Stellen in schwingungsmechanischer Verbindung mit der Behälterwand steht. Schließlich muß der Metallring oder Metallrahmen auch nicht unbedingt ein einstückiger oder lückenlos zusammengefügter Körper sein. Er kann auch aus mehreren Einzelteilen bestehen, die getrennt und/oder mit Lücken auf der Behälterwand befestigt werden.

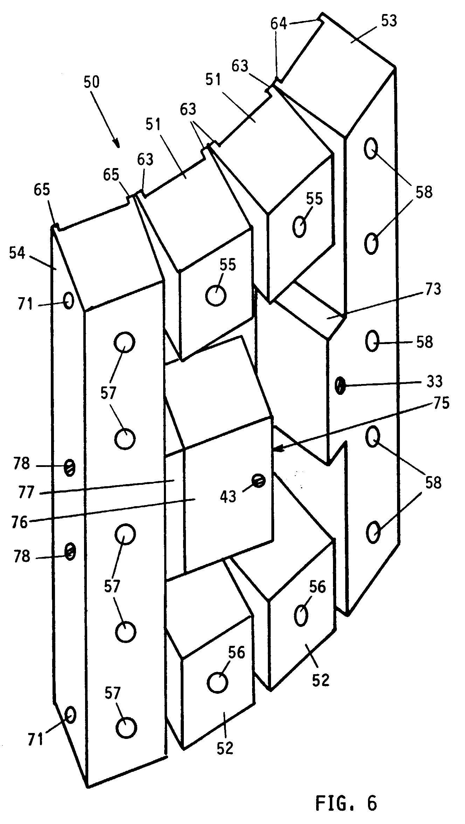

In den Figuren 6 bis 11 ist ein Ausführungsbeispiel des Sensors dargestellt, das die zuvor beschriebenen Abänderungen vereinigt. Bei diesem Ausführungsbeispiel wird zur Abgrenzung des Membranbereichs ein rechteckiger Rahmen 50 verwendet, der so ausgebildet ist, daß er wahlweise auf ebenen Behälterwänden oder auf zylindrischen Behälterwänden unterschiedlicher Krümmung befestigt werden kann. Zu diesem Zweck sind die oberen und unteren horizontalen Rahmenleisten in Segmente 51 bzw. 52 unterteilt, während die beiden seitlichen vertikalen Rahmenleisten 53 und 54 einstückig ausgebildet sind. In jedem Segment 51 und 52 ist eine Bohrung 55 bzw. 56 zur Durchführung eines Gewindebolzens angebracht, und jede seitliche Rahmenleiste 53, 54 enthält mehrere solcher Bohrungen 57 bzw. 58.

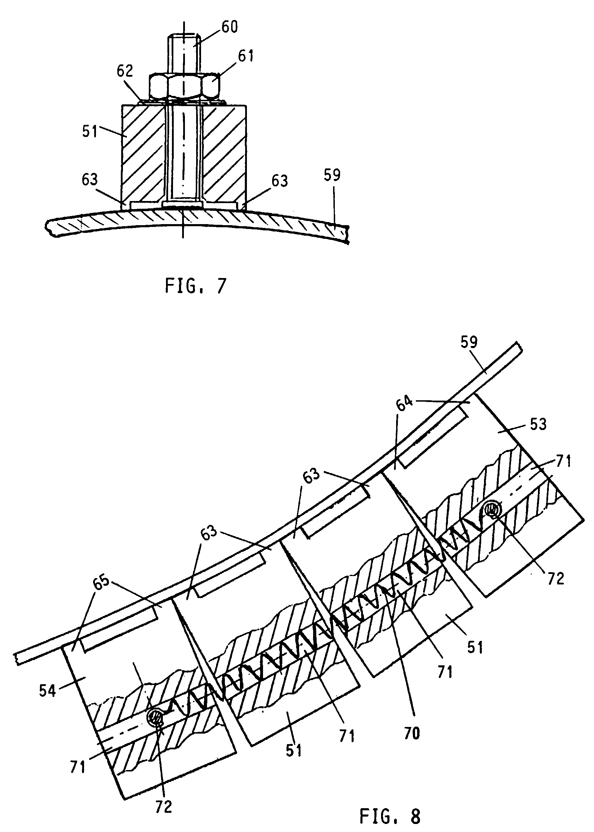

Fig. 7 zeigt, wie eines der Segmente 51 an einer gekrümmten Behälterwand 59 mit Hilfe eines Gewindebolzens 60 und einer auf den Gewindebolzen 60 aufgeschraubten Mutter 61 unter Einfügung einer Beilagscheibe 62 befestigt ist. Der Gewindebolzen 60 ist vorzugsweise durch elektrische Punktschweißung so an der Behälterwand 59 befestigt, daß er genau senkrecht zur Behälterwand steht. Das Segment 51 ist entlang den parallel zu den Mantellinien des Behälters 59 verlaufenden Kanten mit Fußleisten 63 versehen, die an der Behälterwand 59 anliegen, während der zwischen den Fußleisten 63 liegende Teil des Segments 51 im Abstand von der Behälterwand 59 liegt. Dadurch wird trotz der Krümmung der Behälterwand 59 eine genau definierte Anlage des Segments 51 an der Behälterwand erreicht. Alle Segmente 51 und 52 sind in gleicher Weise ausgebildet und befestigt. Wie Fig. 6 zeigt, sind auch die seitlichen Rahmenleisten 53 und 54 entlang den vertikalen Kanten mit Fußleisten 64 bzw. 65 versehen, die entlang den Mantellinien an der Behälterwand anliegen. Diese seitlichen Rahmenleisten sind ebenfalls in der zuvor beschriebenen Weise mittels Gewindebolzen, die durch die Bohrungen 57 bzw. 58 ragen, an der Behälterwand befestigt.

Die Bestandteile des Rahmens 60 sind vor der Montage auf den Gewindebolzen durch Zugfedern zusammengehalten, wie dies in der teilweise geschnittenen Ansicht von Fig. 8 für die Segmente 51 und die seitlichen Rahmenleisten 53, 54 gezeigt ist.

Eine Zugfeder 70 ist in Bohrungen 71 angeordnet, die in den Segmenten 51 und den Rahmenleisten 53, 54 so angebracht sind, daß sie gleichachsig fluchten, wenn die Teile mit ihren einander zugewandten Flächen flach aneinanderliegen. Die Bohrungen 71 liegen natürlich außerhalb der Ebene der Bohrungen, die für die Aufnahme der Gewindebolzen bestimmt sind. Die beiden Enden der Zugfeder 70 sind unter Vorspannung der Zugfeder an Stiften 72 verankert, die in den Rahmenleisten 53 und 54 angebracht sind und quer durch die Bohrungen 71 hindurchgehen. Eine weitere Zugfeder ist in der gleichen Weise in Bohrungen in den Segmenten 52 sowie in entsprechenden Bohrungen in den seitlichen Rahmenleisten 53 und 54 angeordnet. Die beiden Zugfedern halten infolge ihrer Vorspannung die Teile des Rahmens 50 in Anlage aneinander, so daß der Rahmen eben ist, solange er nicht auf den Gewindebolzen befestigt ist. Die Zugfedern erlauben die Dehnung des Rahmens, die erforderlich ist, um die Rahmenteile mit ihren Bohrungen auf die im Lochrastermaß befestigten, von der Behälterwand radial abstehenden Gewindebolzen aufzuschieben.

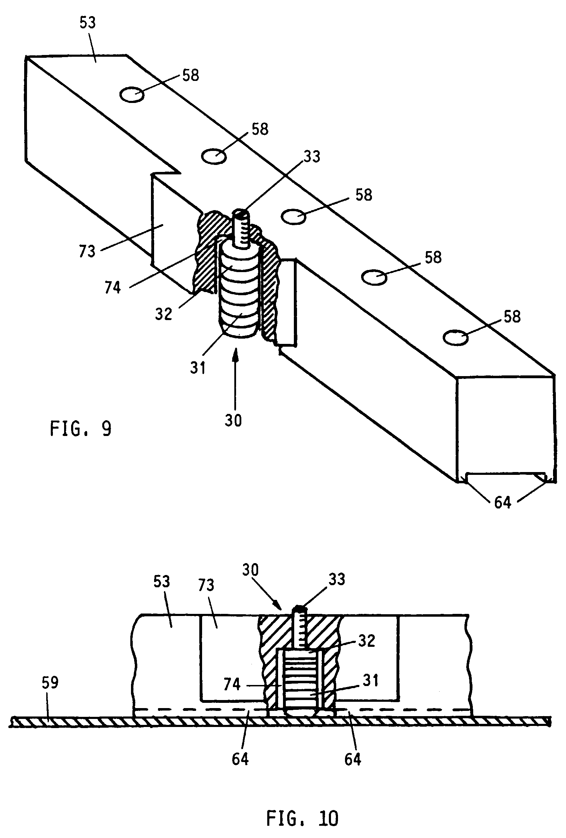

In der Mitte der seitlichen Rahmenleiste 53 ist an der Innenseite ein Vorsprung 73 angeformt, der zur Aufnahme des Erregungswandlers dient. Wie die Figuren 9 und 10 zeigen, hat der Erregungswandler den gleichen Aufbau wie der Erregungswandler 30 von Fig. 3, weshalb seine Bestandteile mit den gleichen Bezugszeichen wie dort bezeichnet sind. Der Piezostapel 31 ist in einer Ausnehmung 74 des Vorsprungs 73 zwischen der Behälterwand 59 und dem Andruckplättchen 32 angeordnet und wird durch die Madenschraube 33, die in eine Gewindebohrung im Vorsprung 73 eingeschraubt ist und auf das Andruckplättchen 32 wirkt, mit einstellbarer Andruckkraft gegen die Behälterwand 59 gepreßt. Wie Fig. 10 erkennen läßt, ist die Fußleiste 64 an der Innenseite der Rahmenleiste 53 im Bereich der Ausnehmung 74 unterbrochen.

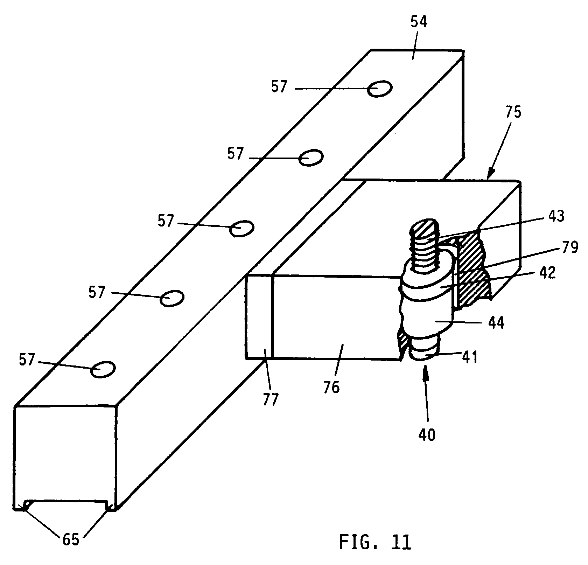

An der gegenüberliegenden Rahmenleiste 54 ist ein Ausleger 75 angebracht, der sich bis über die Mitte des Abstandes zwischen den beiden Rahmenleisten 53 und 54 erstreckt und zur Aufnahme des Empfangswandlers dient. Der Ausleger 75 besteht aus einem Metallblock 76, der unter Einfügung einer Entkopplungsplatte 77 mittels Schrauben 78 an der seitlichen Rahmenleiste 54 befestigt ist. Die Entkopplungsplatte 77 besteht aus einem Material, das die Übertragung von Vibrationen zwischen der Rahmenleiste 54 und dem Metallblock 76 dämpft, beispielsweise aus Gummi. Wie Fig. 11 zeigt, hat der Empfangswandler den gleichen Aufbau wie der Empfangswandler 40 von Fig. 3, weshalb seine Bestandteile mit den gleichen Bezugszeichen wie dort bezeichnet sind. Das Piezoelement 41 ist zusammen mit der Silikonmasse 44 und dem Andruckplättchen 42 in einer Ausnehmung 79 des Metallblocks 76 angeordnet. Die Madenschraube 43, die in eine Gewindebohrung im Metallblock 76 eingeschraubt ist und auf das Andruckplättchen 42 wirkt, hält das Piezoelement 41 mit einstellbarer Andruckkraft in Anlage an der Behälterwand. Die Ausnehmung 79 ist im Metallblock 76 so angebracht, daß der Empfangswandler 40 in der Mitte des vom Rahmen 50 umschlossenen Bereichs an der Behälterwand anliegt.

Wie bei der Ausführungsform von Fig. 2 und 3 bildet auch bei der Ausführungsform von Fig. 6 bis 11 der vom Rahmen 50 abgegrenzte Bereich der Behälterwand die Membran des Sensors. Der Sensor von Fig. 6 bis 11 hat die gleiche Funktionsweise wie der Sensor von Fig. 2 und 3, und er zeigt das gleiche Verhalten, wie es durch die Diagramme von Fig. 4 und 5 dargestellt ist. Die Erregung der Biegeschwingungen des Membranbereichs durch den Erregungswandler 30 und die Auswertung der Ausgangssignale des Empfangswandlers 40 kann daher in der gleichen Weise erfolgen wie dies zuvor für den Sensor von Fig. 2 und 3 beschrieben worden ist.

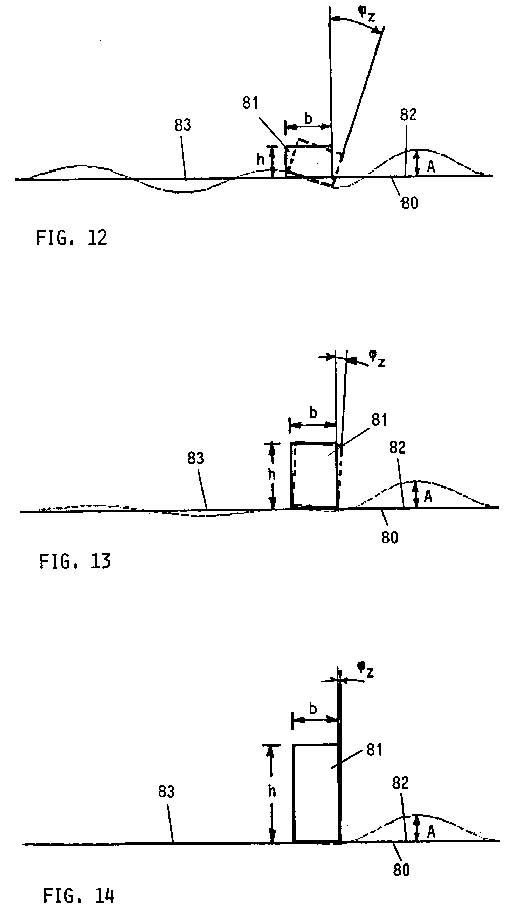

Die Bildung der Membran des Sensors durch einen Bereich der Behälterwand, der durch einen in schwingungsmechanischer Verbindung mit der Behälterwand stehenden Ring oder Rahmen abgegrenzt ist, beruht bei allen beschriebenen Ausführungsbeispielen darauf, daß die Übertragung der Biegeschwingungen des Membranbereichs in den außerhalb des Rings oder Rahmens liegenden Teil der Behälterwand durch die Masse des Rings oder Rahmens abgeschwächt wird. Dies wird durch die Figuren 12 bis 14 veranschaulicht, in denen die berechneten Ergebnisse für verschiedene Massen des Rings oder Rahmens graphisch dargestellt sind. Jede dieser Figuren zeigt einen Schnitt durch eine ebene Behälterwand 80, die im Ruhezustand durch eine gerade Linie dargestellt ist, sowie den Querschnitt eines Ring- oder Rahmenteils 81, der auf der Behälterwand 80 so befestigt ist, daß er in schwingungsmechanischer Verbindung mit der Behälterwand steht. Der rechts vom Ring- oder Rahmenteil 81 liegende Teil 82 der Behälterwand bildet den Membranbereich, der in Biegeschwingungen versetzt wird. Die Amplituden der Biegeschwingungen sind in allen Figuren zur Verdeutlichung stark überhöht dargestellt. Die Berechnungen sind in allen drei Figuren für die gleiche Behälterwand mit einer Dicke von 2,5 mm und für die gleiche Amplitude A der Biegeschwingungen des Membranbereichs 82, jedoch für unterschiedliche Querschnitte des Ring- oder Rahmenteils 81 durchgeführt worden.

Fig. 12 zeigt die Ergebnisse für einen Ring- oder Rahmenteil 81 mit einer Breite b von 30 mm und einer Höhe h von 20 mm. Wie zu erkennen ist, werden die Biegeschwingungen des Membranbereichs 82 mit verhältnismäßig geringer Abschwächung in den außerhalb des Membranbereichs 82 liegenden Wandbereich 83 übertragen. Dabei wird der Ring- oder Rahmenteil 81, wie in Fig. 12 gestrichelt dargestellt ist, infolge der schwingungsmechanischen Verbindung um einen beträchtlichen Winkel φ_{z} ausgelenkt. Dieser Winkel ist wegen der Amplitudenüberhöhung natürlich ebenfalls übertrieben groß dargestellt.

Fig. 13 zeigt die Verhältnisse für einen Querschnitt des Ring- oder Rahmenteils 81 mit der gleichen Breite b von 30 mm, aber der doppelten Höhe h von 40 mm. Der Querschnitt ist also doppelt so groß wie im Fall von Fig. 12, und dementsprechend hat der Ring oder Rahmen die doppelte Masse.

Der Ring- oder Rahmenteil 81 wird infolge seiner größeren Masse nur noch um einen verhältnismäßig kleinen Winkel φ_{z} ausgelenkt, wodurch die Übertragung der Biegeschwingungen des Membranbereichs 82 in den Wandbereich 83 stark abgeschwächt wird.

Schließlich zeigt Fig. 14 die Verhältnisse für einen Querschnitt des Ring- oder Rahmenteils 81 mit der gleichen Breite b von 30 mm, aber der dreifachen Höhe h von 60 mm. Dementsprechend hat der Ring oder Rahmen die dreifache Masse wie im Fall von Fig. 12. In diesem Fall ist der Winkel φ_{z}, um den der Ring- oder Rahmenteil 81 ausgelenkt wird, vernachlässigbar klein, und die Übertragung der Biegeschwingungen des Membranbereichs 82 in den Wandbereich 83 ist praktisch vollständig unterdrückt. Im Fall von Fig. 14 erfüllt somit der Membranbereich 82 die Funktion einer Sensormembran in vollkommener Weise. Eine weitere Vergrößerung der Masse des Rings oder Rahmens würde dann keine nennenswerte Verbesserung mehr ergeben.

Eine brauchbare Membranwirkung wird erzielt, wenn die Masse des Rings oder Rahmens größer als die Masse des innerhalb des Rings oder Rahmens liegenden Bereichs der Behälterwand ist.

Die Erfindung ist natürlich nicht auf die zuvor beschriebenen Ausführungsbeispiele beschränkt. Insbesondere können anstelle von piezoelektrischen Wandlern beliebige andere elektromechanische Wandler verwendet werden, die in der Lage sind, den abgegrenzten Membranbereich aufgrund einer zugeführten elektrischen Spannung in mechanische Schwingungen zu versetzen bzw. die mechanischen Schwingungen des Membranbereichs abzutasten und in ein elektrisches Signal umzuwandeln. Hierfür eignen sich beispielsweise auch elektromagnetische oder magnetostriktive Wandler. Die Wandler können in jeder beliebigen geeigneten Weise so befestigt werden, daß sie in der erforderlichen Wechselwirkung mit dem Membranbereich stehen.

Der Metallring oder Metallrahmen kann auch auf andere Weise als durch Gewindebolzen und Muttern an der Behälterwand befestigt werden, z.B. durch Schweißen, Kleben usw. Grundsätzlich eignet sich jede Befestigungsart, die eine schwingungsmechanische Verbindung des Metallrings oder Metallrahmens mit der Behälterwand gewährleistet. Die Befestigung mittels Gewindebolzen ergibt den Vorteil, daß der gesamte Sensor im Bedarfsfall leicht von der Behälterwand abgenommen werden kann.

Die zuvor beschriebene Detektion des Füllstands durch Auswertung der Eigenresonanzfrequenz des Membranbereichs eignet sich nur für flüssige Füllgüter, da nur bei diesen eine merkliche Änderung der Eigenresonanzfrequenz in Abhängigkeit vom Bedeckungsgrad des Membranbereichs eintritt. Der beschriebene Sensor kann jedoch ohne Abänderung seines mechanischen Aufbaus zur Überwachung des Füllstands von festen Füllgütern, beispielsweise körnigen oder pulverförmigen Füllgütern verwendet werden, indem anstelle der Eigenresonanzfrequenz die Dämpfung der Schwingungsamplitude des Membranbereichs ausgewertet wird. Hierzu ist lediglich eine Änderung der Erregungs- und Auswerteschaltung erforderlich. Diese Abänderung ist dem Durchschnittsfachmann aufgrund seiner Fachkenntnisse geläufig, da auch bei anderen Füllstandssensoren, die wahlweise für flüssige oder für feste Füllgüter angewendet werden, entsprechende unterschiedliche Erregungs- und Auswerteschaltungen bekannt sind. Beispielsweise kann die Auswerteschaltung so abgeändert werden, daß anstelle eines Frequenz- oder Phasendiskriminators ein Amplitudendiskriminator vorgesehen wird, dessen Ausgangssignal anzeigt, ob die Amplitude des Ausgangssignals des Empfangswandlers über oder unter einem eingestellten Amplitudenschwellenwert liegt. Der Amplitudenschwellenwert wird so eingestellt, daß er größer als die Amplitude des Ausgangssignals bei bedecktem Membranbereich und kleiner als die Amplitude des Ausgangssignals bei unbedecktem Membranbereich ist.

## Patentansprüche

1. Vorrichtung zur Feststellung und/oder Überwachung eines vorbestimmten Füllstands in einem Behälter, mit einem Behälter (10), an dem ein auf der Höhe des vorbestimmten Füllstands liegender Bereich der Behälterwand (12) zur Bildung eines Membranbereichs (24) allseitig durch einen an der Außenseite der Behälterwand (12) angebrachten, in starrer Verbindung mit der Behälterwand (12) stehenden Ring oder Rahmen (20) abgegrenzt ist, dessen Masse größer als die Masse des abgegrenzten Membranbereichs (24) der Behälterwand (12) ist, mit einem elektromechanischen Erregungswandler (30), der bei Speisung mit einer elektrischen Spannung den abgegrenzten Membranbereich (24) der Behälterwand (12) in Schwingungen mit seiner Eigenresonanzfrequenz versetzt, mit einem elektromechanischen Empfangswandler (40), der die Schwingungen des abgegrenzten Membranbereichs (24) der Behälterwand (12) in eine elektrische Wechselspannung umsetzt, und mit einer Auswerteschaltung (15, 17) zur Auslösung von Anzeige- und/oder Schaltvorgängen in Abhängigkeit von der Frequenz, der Phase oder der Amplitude der vom Empfangswandler (40) abgegebenen Wechselspannung, wobei die der Behälterwand (12) zugewandte Stirnfläche des Rings oder Rahmens (20) abgeschrägt ist, so daß der Ring oder Rahmen (20) nur mit der Innenkante an der Behälterwand (12) anliegt.

2. Vorrichtung nach Anspruch 1, **dadurch gekennzeichnet,** daß der Winkel zwischen der Behälterwand (12) und der Stirnfläche des Rings oder Rahmens (20) in der Größenordnung von 0,1° liegt.

3. Vorrichtung zur Feststellung und/oder Überwachung eines vorbestimmten Füllstands in einem Behälter, mit einem Behälter (10), an dem ein auf der Höhe des vorbestimmten Füllstands liegender Bereich der Behälterwand (59) zur Bildung eines Membranbereichs allseitig durch einen an der Außenseite der Behälterwand (59) angebrachten, in starrer Verbindung mit der Behälterwand stehenden Ring oder Rahmen (50) abgegrenzt ist, dessen Masse größer als die Masse des abgegrenzten Membranbereichs der Behälterwand (59) ist, mit einem elektromechanischen Erregungswandler (30), der bei Speisung mit einer elektrischen Spannung den abgegrenzten Membranbereich der Behälterwand (59) in Schwingungen mit seiner Eigenresonanzfrequenz versetzt, mit einem elektromechanischen Empfangswandler (40), der die Schwingungen des abgegrenzten Membranbereichs der Behälterwand (59) in eine elektrische Wechselspannung umsetzt, und mit einer Auswerteschaltung (15, 17) zur Auslösung von Anzeige- und/oder Schaltvorgängen in Abhängigkeit von der Frequenz, der Phase oder der Amplitude der vom Empfangswandler (40) abgegebenen Wechselspannung, wobei der Ring oder Rahmen (50) in Segmente (51, 52, 53, 54) unterteilt ist, die an den der Behälterwand (59) zugewandten Flächen mit entlang ihren Kanten verlaufenden Fußleisten (63, 64, 65) versehen sind, die an der Behälterwand (59) anliegen, während der zwischen den Fußleisten (63, 64, 65) liegende Teil jedes Segments (51, 52, 53, 54) im Abstand von der Behälterwand (59) liegt.

4. Vorrichtung nach Anspruch 3, **dadurch gekennzeichnet,** daß im Falle einer gekrümmten Behälterwand (59) die Fußleisten (63, 64, 65) entlang den parallel zu den Mantellinien der Behälterwand (59) verlaufenden Kanten der Segmente (51, 52, 53, 54) angebracht sind.

5. Vorrichtung nach Anspruch 3 oder 4, **dadurch gekennzeichnet,** daß die Segmente (51, 52, 53, 54) durch Zugfedern (70) zusammengehalten sind, die sich durch Bohrungen (71) in den Segmenten (51, 52, 53, 54) erstrecken und an Rahmenteilen (53, 54) verankert sind.

6. Vorrichtung nach einem der vorhergehenden Ansprüche, **dadurch gekennzeichnet,** daß der Ring oder Rahmen (20; 50) mittels an der Behälterwand (12; 59) befestigter Gewindebolzen (21; 60) an der Behälterwand (12; 59) montiert ist.

7. Vorrichtung nach Anspruch 6, **dadurch gekennzeichnet,** daß die Gewindebolzen (21; 60) an der Behälterwand angeschweißt sind.

8. Vorrichtung nach einem der vorhergehenden Ansprüche, **dadurch gekennzeichnet,** daß der Erregungswandler (30) am Rand und der Empfangswandler (40) in der Mitte des abgegrenzten Membranbereichs (24) angeordnet ist.

9. Vorrichtung nach einem der vorhergehenden Ansprüche, **dadurch gekennzeichnet,** daß der Erregungswandler (30) durch einen Stapel von piezoelektrischen Elementen (31) gebildet ist, der zwischen der Behälterwand (12; 59) und einem mit dem Ring oder Rahmen (20; 50) fest verbundenen Abstützteil (25; 75) eingespannt ist.

10. Vorrichtung nach Anspruch 9, **gekennzeichnet durch** ein zwischen-dem Abstützteil (25; 75) und dem Piezostapel (31) angeordnetes Stellglied zur Einstellung der Kraft, mit der der Piezostapel (31) gegen die Behälterwand (12; 59) gedrückt wird.

11. Vorrichtung nach Anspruch 10, **dadurch gekennzeichnet,** daß das Stellglied eine in eine Gewindebohrung im Abstützteil (25; 75) eingeschraubte Madenschraube (33) ist.

12. Vorrichtung nach einem der Ansprüche 9 bis 11, **dadurch gekennzeichnet,** daß das Abstützteil eine sich quer über den Ring oder Rahmen (20) erstreckende steife Brücke (25) ist.

13. Vorrichtung nach einem der Ansprüche 9 bis 11, **dadurch gekennzeichnet,** daß das Abstützteil ein an einem Ring- oder Rahmenteil (53) angeformter Vorsprung (73) ist.

14. Vorrichtung nach Anspruch 13, **dadurch gekennzeichnet,** daß der Vorsprung eine Ausnehmung (74) aufweist, in der der Piezostapel (31) angeordnet ist.

15. Vorrichtung nach einem der vorhergehenden Ansprüche, **dadurch gekennzeichnet,** daß der Empfangswandler (40) durch wenigstens ein piezoelektrisches Element (41) gebildet ist, das zwischen der Behälterwand (12; 59) und einem mit dem Ring oder Rahmen (20; 50) fest verbundenen Abstützteil (25; 75) eingespannt ist.

16. Vorrichtung nach Anspruch 15, **dadurch gekennzeichnet,** daß zwischen das piezoelektrische Element (41) und das Abstützteil (25; 75) ein elastisches Federelement (44) eingefügt ist.

17. Vorrichtung nach Anspruch 16, **dadurch gekennzeichnet,** daß das elastische Federelement (44) eine Silikonmasse ist.

18. Vorrichtung nach Anspruch 16 oder 17, **gekennzeichnet durch** ein zwischen dem Abstützteil (25; 75) und dem Federelement (44) angeordnetes Stellglied (43) zur Einstellung der Kraft, mit der das piezoelektrische Element (41) in Anlage an der Behälterwand (12; 59) gehalten wird.

19. Vorrichtung nach Anspruch 18, **dadurch gekennzeichnet,** daß das Stellglied eine in eine Gewindebohrung im Abstützteil (25; 75) eingeschraubte Madenschraube (43) ist.

20. Vorrichtung nach einem der Ansprüche 15 bis 19, **dadurch gekennzeichnet,** daß das Abstützteil eine sich quer über den Ring oder Rahmen (20) erstreckende steife Brücke (25) ist.

21. Vorrichtung nach einem der Ansprüche 15 bis 19, **dadurch gekennzeichnet,** daß das Abstützteil ein an einem Ring- oder Rahmenteil (54) angebrachter Ausleger (75) ist, der sich bis über die Mitte des abgegrenzten Membranbereichs erstreckt.

22. Vorrichtung nach Anspruch 21, **dadurch gekennzeichnet,** daß der Ausleger (75) einen Metallblock (76) und ein zwischen dem Metallblock (76) und dem Ring- oder Rahmenteil (54) angeordnetes Entkopplungsteil (77) aufweist.

23. Vorrichtung nach Anspruch 22, **dadurch gekennzeichnet,** daß das Entkopplungsteil eine Gummiplatte (77) ist.

## Claims

1. Device for determining and/or monitoring a predetermined contents level in a container, comprising a container (10) on which a region of the container wall (12) situated at the height of the predetermined level is delimited, for defining a diaphragm region (24), on all sides by a ring or frame (20) which is attached to the outer side of the container wall (12) and is in rigid connection with the container wall (12), the mass of the ring or frame being greater than the mass of the defined diaphragm region (24) of the container wall (12), an electromechanical excitation transducer (30) which when fed with an electrical voltage sets the defined diaphragm region (24) of the container wall (12) in oscillations at its self-resonant frequency, an electromechanical receiving transducer (40) which converts the oscillations of the defined diaphragm region (24) of the container wall (12) into an electrical AC voltage, and an evaluating circuit (15, 17) for initiating display and/or switching operations in dependence upon the frequency, the phase or the amplitude of the AC voltage emitted by the receiving transducer (40), wherein the end face of the ring or frame (20) facing the container wall (12) is bevelled so that the ring or frame (20) bears on the container wall (12) only with the inner edge.

2. Device according to claim 1, characterized in that the angle between the container wall (12) and the end face of the ring or frame (20) is in the order of .1 degree.

3. Device for determining and/or monitoring a predetermined contents level in a container, comprising a container (10) on which a region of the container wall (59) situated at the height of the predetermined level is delimited, for defining a diaphragm region, on all sides by a ring or frame (50) which is attached to the outer side of the container wall (59) and is in rigid connection with the container wall, the mass of the ring or frame being greater than the mass of the defined diaphragm region of the container wall (59), an electromechanical excitation transducer (30) which when fed with an electrical voltage sets the defined diaphragm region of the container wall (59) in oscillations at its self-resonant frequency, an electromechanical receiving transducer (40) which converts the oscillations of the defined diaphragm region of the container wall (59) into an electrical AC voltage, and an evaluating circuit (15, 17) for initiating display and/or switching operations in dependence upon the frequency, the phase or the amplitude of the AC voltage emitted by the receiving transducer (40), wherein the ring or frame (50) is divided into segments (51, 52, 53, 54) provided along the edges of the faces facing the container wall (59) with foot strips (63, 64, 65) which bear on the container wall (59) whilst the portion of each segment (51, 52, 53, 54) lying between the foot strips (63, 64, 65) is spaced from the container wall (59).

4. Device according to claim 3, characterized in that in the case of a curved container wall (59) the foot strips (63, 64, 65) are provided along the edges of the segments (51, 52, 53, 54) running parallel to the generatrices of the container wall (59).

5. Device according to claim 3 or claim 4, characterized in that the segments (51, 52, 53, 54) are held together by tension springs (70) which extend through bores (71) in the segments (51, 52, 53, 54) and are anchored to frame members (53, 54).

6. Device according to any one of the preceding claims, characterized in that the ring or frame (20; 50) is mounted on the container wall (12; 59) by means of threaded bolts (21; 60) secured to the container wall (12; 59).

7. Device according to claim 6 characterized in that the threaded bolts (21; 60) are welded onto the container wall.

8. Device according to any one of the preceding claims, characterized in that the excitation transducer (30) is arranged at the edge and the receiving transducer (40) in the centre of the defined diaphragm region (24).

9. Device according to any one of the preceding claims, characterized in that the excitation transducer (30) is formed by a stack of piezoelectric elements (31) which is clamped between the container wall (12; 59) and a support member (25; 75) fixedly connected to the ring or frame (20; 50).

10. Device according to claim 9, characterized by an adjustment member arranged between the support member (25: 75) and the piezo stack (31) for adjusting the force with which the piezo stack (31) is pressed against the container wall (12; 59).

11. Device according to claim 10, characterized in that the adjustment member is a grub screw (33) screwed into a threaded bore in the support member (25; 75).

12. Device according to any one of claims 9 to 11, characterized in that the support member is a stiff bridge (25) extending transversely across the ring or frame (20).

13. Device according to any one of claims 9 to 11, characterized in that the support member is a projection (73) integrally formed on a segment (53) of the ring or frame.

14. Device according to claim 13, characterized in that the projection has a recess (74) in which the piezo stack (31) is arranged.

15. Device according to any one of the preceding claims, characterized in that the receiving transducer (40) is formed by at least one piezoelectric element (41) which is clamped between the container wall (12; 59) and a support member (25; 75) fixedly connected to the ring or frame (20; 50).

16. Device according to claim 15, characterized in that between the piezoelectric element (41) and the support member (25; 75) an elastic spring element (44) is inserted.

17. Device according to claim 16, characterized in that the elastic spring element (44) is a silicone composition.

18. Device according to claim 16 or claim 17, characterized by an adjustment member (43) arranged between the support member (25; 75) and the spring element (44) for adjusting the force with which the piezoelectric element (41) is held in engagement with the container wall (12; 59).

19. Device according to claim 18, characterized in that the adjustment member is a grub screw (43) screwed into a threaded bore in the support member (25; 75).

20. Device according to any one of claims 15 to 19, characterized in that the support member is a stiff bridge (25) extending transversely across the ring or frame (20).

21. Device according to any one of claims 15 to 19, characterized in that the support member is a cantilever member (75) which is fixedly connected to a ring or frame member (54) and extends beyond the centre of the defined diaphragm region.

22. Device according to claim 21,characterized in that the cantilever member (75) comprises a metal block (76) and a decoupling member (77) arranged between the metal block (76) and the ring or frame member (54).

23. Device according to claim 22, characterized in that the decoupling member is a rubber plate (77).

## Revendications

1. Dispositif pour constater et/ou contrôler, dans un récipient, un niveau de remplissage prédéterminé, comprenant un récipient (10) sur lequel une zone de la paroi (12) du récipient, se trouvant à la hauteur du niveau de remplissage prédéterminé, servant à former, sur tous les côtés, une zone de membrane (24), est délimitée par un anneau ou un cadre (20) monté sur le côté extérieur de la paroi (12) du récipient, et formant avec la paroi (12) du récipient un assemblage rigide, anneau ou cadre dont la masse est supérieure à la masse de la zone de membrane (24) de la paroi (12) du récipient,
- un transducteur électromécanique (30) d'excitation qui, lorsqu'il est alimenté par une tension électrique, déplace la zone de membrane (24) délimitée de la paroi (12) du récipient par des vibrations à sa fréquence de résonance propre,
- un transducteur électromécanique (40) de réception qui transforme les vibrations de la zone de membrane (24) délimitée de la paroi (12) du récipient en une tension électrique alternative, et
- un circuit de traitement (15, 17) pour déclencher les processus de visualisation et/ou de commutation en fonction de la fréquence, de la phase ou de l'amplitude de la tension alternative fournie par le transducteur électromécanique (40) de réception, la surface frontale de l'anneau ou du cadre (20), dirigée vers la paroi (12) du récipient, étant chanfreinée de façon telle que l'anneau ou le cadre (20) n'est contigu qu'à l'arête intérieure de la paroi (12) du récipient.

2. Dispositif selon la revendication 1, **caractérisé en ce que** l'angle entre la paroi (12) du récipient et la surface frontale de l'anneau ou du cadre (20) est d'un ordre de grandeur de 0,1°.

3. Dispositif pour constater et/ou contrôler, dans un récipient, un niveau de remplissage prédéterminé, comprenant
- un récipient (10) sur lequel une zone de la paroi (59) du récipient, se trouvant à la hauteur du niveau de remplissage prédéterminé, servant à former, sur tous les côtés, une zone de membrane, est délimitée par un anneau ou un cadre (50) monté sur le côté extérieur de la paroi (59) du récipient, et formant avec la paroi du récipient un assemblage rigide, anneau ou cadre dont la masse est supérieure à la masse de la zone de membrane de la paroi (59) du récipient,
- un transducteur électromécanique (30) d'excitation qui, lorsqu'il est alimenté par une tension électrique, déplace la zone de membrane délimitée de la paroi (59) du récipient par des vibrations à sa fréquence de résonance propre,
- un transducteur électromécanique (40) de réception qui transforme les vibrations de la zone de membrane délimitée de la paroi (59) du récipient en une tension électrique alternative, et
- un circuit de traitement (15, 17) pour déclencher les processus de visualisation et/ou de commutation en fonction de la fréquence, de la phase ou de l'amplitude de la tension alternative fournie par le transducteur électromécanique (40) de réception, l'anneau ou le cadre (50) étant divisé en segments (51, 52, 53, 54) qui sont pourvus, sur les surfaces dirigées vers la paroi (59) du récipient, de baguettes (63, 64, 65) s'étendant le long des arêtes des segments, baguettes qui sont contiguës à la paroi (59) du récipient, tandis que la partie de chaque segment (51, 52, 53, 54), se trouvant entre les baguettes (63, 64, 65), est à distance de la paroi (59) du récipient.

4. Dispositif selon la revendication 3, **caractérisé en ce que** les baguettes (63, 64, 65), dans le cas d'une paroi (59) incurvée du récipient, sont appliquées le long des arêtes des segments (51, 52, 53, 54) s'étendant parallèlement aux lignes extérieures de la paroi (59) du récipient.

5. Dispositif selon la revendication 3 ou 4, **caractérisé en ce que** les segments (51, 52, 53, 54) sont maintenus ensemble par des ressorts de traction (70) qui s'étendent dans les segments (51, 52, 53, 54) en traversant des perçages (71) et sont fixés au niveau des parties (53, 54) du cadre.

6. Dispositif selon l'une quelconque des revendications précédentes, **caractérisé en ce que** l'anneau ou le cadre (20 ; 50) est monté sur la paroi (12 ; 59) du récipient au moyen de boulons filetés (21 ; 60) fixés sur la paroi (12 ; 59) du récipient.

7. Dispositif selon la revendication 6, **caractérisé en ce que** les boulons filetés (21 ; 60) sont soudés à la paroi du récipient.

8. Dispositif selon l'une quelconque des revendications précédentes, **caractérisé en ce que** le transducteur d'excitation (30) est disposé au bord de la zone de membrane (24) délimitée et que le transducteur de réception (40) est disposé au milieu de cette zone.

9. Dispositif selon l'une quelconque des revendications précédentes, **caractérisé en ce que** le transducteur d'excitation (30) est constitué d'une pile d'éléments piézoélectriques (31), qui est fixée entre la paroi (12 ; 59) du récipient et une pièce d'appui (25 ; 75) reliée fixement à l'anneau ou au cadre (20 ; 50).

10. Dispositif selon la revendication 9, **caractérisé par** un élément de réglage disposé entre la pièce d'appui (25 ; 75) et la pile d'éléments piézoélectriques (31), et servant à régler la force avec laquelle la pile (31) d'éléments piézoélectriques vient en appui contre la paroi (12 ; 59) du récipient.

11. Dispositif selon la revendication 10, **caractérisé en ce que** l'élément de réglage est une vis sans tête (33) vissée dans un perçage fileté de la pièce d'appui (25 ; 75).

12. Dispositif selon l'une quelconque des revendications 9 à 11, **caractérisé en ce que** la pièce d'appui est un pont rigide (25) s'étendant transversalement au-dessus de l'anneau ou du cadre (20).

13. Dispositif selon l'une quelconque des revendications 9 à 11, **caractérisé en ce que** la pièce d'appui est une partie en saillie (73) formée sur une partie (53) de l'anneau ou du cadre.

14. Dispositif selon la revendication 13, **caractérisé en ce que** la partie en saillie présente un évidement (74) dans lequel est disposée la pile (31) d'éléments piézoélectriques.

15. Dispositif selon l'une quelconque des revendications précédentes, **caractérisé en ce que** le transducteur de réception (40) est constitué au moins d'un élément piézoélectrique (41) qui est fixé entre la paroi (12 ; 59) du récipient et une pièce d'appui (25 ; 75) reliée fixement à l'anneau ou au cadre (20 ; 50).

16. Dispositif selon la revendication 15, **caractérisé en ce qu'**un élément élastique (44) à ressort est inséré entre l'élément piézoélectrique (41) et la pièce d'appui (25 ; 75).

17. Dispositif selon la revendication 16, **caractérisé en ce que** l'élément élastique (44) à ressort est une masse de silicone.

18. Dispositif selon la revendication 16 ou 17, **caractérisé par** un élément de réglage (43) disposé entre la pièce d'appui (25 ; 75) et l'élément à ressort (44), et servant à régler la force avec laquelle l'élément piézoélectrique (41) est maintenu contigu à la paroi (12 ; 59) du récipient.

19. Dispositif selon la revendication 18, **caractérisé en ce que** l'élément de réglage est une vis sans tête (43) vissée dans un perçage fileté de la pièce d'appui (25 ; 75).

20. Dispositif selon l'une quelconque des revendications 15 à 19, **caractérisé en ce que** la pièce d'appui est un pont rigide (25) s'étendant transversalement au-dessus de l'anneau ou du cadre (20).

21. Dispositif selon l'une quelconque des revendications 15 à 19, **caractérisé en ce que** la pièce d'appui est une console (75) fixée sur une partie (54) de l'anneau ou du cadre, console s'étendant au-delà du milieu de la zone de membrane délimitée.

22. Dispositif selon la revendication 21, **caractérisé en ce que** la console (75) présente un bloc métallique (76) et un élément de découplage (77) disposé entre le bloc métallique (76) et la partie (54) de l'anneau ou du cadre.

23. Dispositif selon la revendication 22, **caractérisé en ce que** l'élément de découplage est une plaque en caoutchouc (77).
